# EUROPÄISCHE PATENTSCHRIFT

(11) **EP 1 920 161 B1**
(45) Veröffentlichungstag und Bekanntmachung des Hinweises auf die Patenterteilung: **18.07.2018**
(21) Anmeldenummer: 06792863.0
(22) Anmeldetag: 17.08.2006
(51) Int. Cl.: F04D 19/04, F04D 27/02, H02P 6/16, H02P 6/18

(54) **VAKUUM-TURBOMOLEKULARPUMPE**
VACUUM TURBOMOLECULAR PUMP
POMPE TURBOMOLECULAIRE A VIDE

(30) Priorität: 01.09.2005 DE 102005041501
(43) Veröffentlichungstag der Anmeldung: 14.05.2008
(73) Patentinhaber: Leybold GmbH, 50968 Köln (DE)
(72) Erfinder: GREVEN, Alois, 41812 Erkelenz (DE); HARIG, Christian, 51105 Köln (DE)
(74) Vertreter: dompatent von Kreisler Selting Werner - Partnerschaft von Patent- und Rechtsanwälten mbB
(86) Internationale Anmeldenummer: PCT/EP2006/065384
(87) Internationale Veröffentlichungsnummer: WO 2007/025865

(56) Entgegenhaltungen:
- WO-A-98/32972
- WO-A-03/085268
- DE-A1- 19 745 490
- US-A- 3 535 052
- US-A- 5 216 343
- US-B1- 6 184 640

## Beschreibung

Die Erfindung bezieht sich auf eine Vakuum-Turbomolekularpumpe mit einem Gleichstrom-Antriebsmotor, der einen permanent-magnetischen Motorrotor und Statorspulen aufweist.

Vakuum-Turbomolekuiarpumpen sind schnelldrehende Turbomaschinen mit maximalen Drehzahlen im Bereich von 20.000-100.000 Umdrehungen pro Minute bzw. maximalen Drehfrequenzen von 300 Hz bis 1.700 Hz. Als Antrieb für den Pumpenrotor werden wegen der günstigen Verlustleistungsbilanz häufig bürstenlose Gleichstrom-Antriebsmotoren verwendet, die einen permanent-magnetisch erregten Motorrotor aufweisen.

Bei hohen Drehfrequenzen haben Rotorteile, die sich im Betrieb vom Rotor lösen, eine sehr hohe kinetische Energie. Vakuum-Turbomolekularpumpen, die naturgemäß mit hohen Drehfrequenzen drehen, bergen für den Fall eines Crashes ein hohes Verletzungsrisiko. Dieses kann nur durch eine entsprechende Panzerung des Pumpenstators vermindert werden, was mit einem hohen Aufwand verbunden ist. Insbesondere bei großen Turbomaschinen kann das Pumpengehäuse nicht beliebig eigensicher ausgelegt werden. Eine selten auftretende, aber überaus gefährliche Ursache für derartige Unfälle stellt eine Drehzahlerhöhung des Pumpenrotors über die Nenndrehzahl hinaus dar, da die Rotorflügel-Anbindung an die Rotornabe nur für die Nenndrehzahl zuzüglich einer relativ geringen Sicherheit ausgelegt ist. Es ist daher sehr wichtig, Überdrehzahlen bzw. Überdrehfrequenzen, d.h. Drehfrequenzen oberhalb der Nenn-Drehfrequenz zuverlässig zu vermeiden.

Wenn der Drehfrequenzregler in der Motorsteuerung versagt, besteht ein erhebliches Risiko einer sich über die Nenn-Drehfrequenz erhöhenden Drehfrequenz.

Die gängigen Sicherheitsanforderungen (siehe z.B. WO 03/085268 A1) verlangen daher eine zweite unabhängige Drehfrequenz-Kontrolleinrichtung, die einschließlich zusätzlicher Sensoren, einer zusätzlichen Zeitbasis etc. einen erheblichen Mehraufwand darstellt.

Aufgabe der Erfindung ist es demgegenüber, eine Vakuum-Turbomolekularpumpe zu schaffen, die mit wenig Aufwand und mit hoher Sicherheit vor Überdrehzahlen geschützt ist.

Diese Aufgabe wird erfindungsgemäß mit den Merkmalen des Anspruches 1 gelöst.

Die erfindungsgemäße Vakuum-Turbomolekularpumpe weist eine Spannungsversorgung zur Versorgung der Motorsteuerung mit einer Versorgungsspannung U_{V} auf, die konstant ist und so niedrig eingestellt ist, dass bei einer Grenz-Drehfrequenz f_{G} die elektromotorische Kraft gleich der von der Motorsteuerung und den Statorspulen maximal erzeugbaren Antriebskraft ist, wobei die Grenz-Drehfrequenz f_{G} weniger als das 1,3-fache der Nenn-Drehfrequenz f_{N} ist.

Bei bürstenlosen Gleichstrommotoren mit permanent erregtem Rotor stellt sich eine maximale Drehfrequenz von selbst dadurch ein, dass die durch den Permanentmagneten des Rotors in den Statorspulen induzierte Spannung bzw. elektromotorische Kraft (EMK) bei Erreichen der maximalen Drehfrequenz so groß wird, dass die maximal zur Verfügung stehende Antriebskraft vollständig kompensiert wird. Die in den Statorspulen durch den Motorrotor induzierte Spannung ist proportional zur Drehzahl bzw. zur Drehfrequenz. Da die Motorsteuerung von einer Spannungsversorgung mit elektrischer Energie versorgt wird, und die Spannungsversorgung eine konstante Gleichspannung als Versorgungsspannung für die Motorsteuerung liefert, kann die Drehfrequenz über die maximale Drehfrequenz nicht hinaus wachsen.

Die von der Spannungsversorgung der Motorsteuerung zur Verfügung gestellte elektrische Energie ist genau so groß, dass sich bei der relativ niedrigen und sich an der Nenn-Drehfrequenz f_{N} orientierenden Grenz-Drehfrequenz f_{G} ein Gleichgewicht zwischen der elektromotorischen Kraft und der von der Motorsteuerung aufgrund der Leistungsbegrenzung maximal in den Statorspulen generierbaren Antriebskraft einstellt. Selbst wenn der eigentliche Drehfrequenzregler ausfallen sollte, kann der Antriebsmotor aus physikalischen Gründen nicht um mehr als um das 1,3-fache über die Nenn-Drehfrequenz f_{N} hinaus beschleunigen. Die Grenz-Drehfrequenz f_{G} ist vorzugsweise kleiner als das 1,1-fache der Nenn-Drehfrequenz f_{N}.

In der Praxis ist der Pumpenrotor einer schnelldrehenden Vakuum-Turbomolekularpumpe so ausgelegt, dass er Drehfrequenz-Erhöhungen um 10-30% gegenüber der Nenn-Drehfrequenz verträgt, ohne zerstört zu werden, bzw. ohne dass die Rotorflügel derart gestreckt werden, dass sie mit dem Pumpenstator kollidieren. Durch das Begrenzen der der Motorsteuerung zur Verfügung stehenden elektrischen Energie wird der Antriebsmotor und damit der Pumpenrotor zuverlässig vor zu hohen Überdrehzahlen geschützt. Ein zweites Drehzahl-Kontrollsystem kann daher entfallen.

Gemäß einer bevorzugten Ausgestaltung weist die Schutzvorrichtung auf:
einen EMK-Eingang, an dem die von dem Rotormagneten in den Statorspulen induzierte Spannung anliegt,
einen EMK-Grenzwertspeicher, in dem frequenzabhängig EMK-Grenzwerte gespeichert sind,
ein EMK-Auswertemodul, das feststellt, ob der am EMK-Eingang gemessene Spannungswert den EMK-Grenzwert unterschreitet, und
ein Signalgeber, der ein Unterschreitungssignal ausgibt, wenn das EMK-Auswertemodul eine Unterschreitung feststellt.

Die durch die elektromotorische Kraft in den Statorspulen induzierte Spannung ist außer von der Drehzahl auch abhängig von der Magnetkraft des bzw. der Permanentmagneten des Motorrotors. Die Magnetkraft von Permanentmagneten nimmt jedoch mit zunehmendem Alter, und darüber hinaus beeinflusst durch Temperatur, ab. Die der von der Motorsteuerung über die Statorspulen erzeugten Antriebskraft entgegenwirkende elektromotorische Kraft wird also, bezogen auf dieselbe Drehfrequenz, im Laufe der Zeit niedriger, so dass sich das Gleichgewicht nicht mehr bei der festgelegten Grenz-Drehfrequenz f_{G} einstellt, sondern bei einer darüber liegenden Drehfrequenz.

Dies wird erfindungsgemäß dadurch vermieden, dass die von dem Motorrotor in den Statorspulen induzierte Spannung drehfrequenzbezogen überwacht wird. Verringert sich der Eigenmagnetismus des Motorrotors, verringert sich auch die induzierte Spannung. Dies wird gegebenenfalls mit Hilfe der genannten Merkmale festgestellt und ein entsprechendes Signal ausgegeben, das zur Korrektur der Versorgungsspannung des Antriebsmotors genutzt wird. Gemäß einer bevorzugten Ausgestaltung weist die Schutzvorrichtung einen Versorgungsspannungs-Eingang auf und gibt ein Überspannungs-Signal aus, wenn die an dem Eingang gemessene Versorgungsspannung einen gespeicherten Versorgungsspannungs-Grenzwert überschreitet. Auf diese Weise überwacht die Schutzvorrichtung die Spannungsversorgung, die für die passive Begrenzung der Drehfrequenz des Antriebsmotors verantwortlich ist. Wenn ein Ansteigen der von der Spannungsversorgung gelieferten Versorgungsspannung festgestellt wird, wird ein entsprechendes Überspannungssignal ausgegeben, so dass vermieden wird, dass bei gleichzeitigem Ausfall des Drehfrequenzreglers die Drehfrequenz des Antriebsmotors über die Grenz-Drehfrequenz hinaus ansteigen kann. Gemäß einer bevorzugten Ausgestaltung ist der Signalgeber mit einem Abschaltelement verbunden, das bei Eingang eines Unterschreitungs-Signales oder Überspannungs-Signales den Antriebsmotor abschaltet. Im Falle einer Störung wird nicht versucht, diese zunächst durch entsprechendes Regeln zu korrigieren, sondern wird über das Abschaltelement der Antriebsmotor sofort abgeschaltet, um jedes Risiko, das mit einer Fortsetzung des Betriebes verbunden wäre, auszuschließen. Der Signalgeber ist mit der Spannungsversorgung verbunden, so dass die Spannungsversorgung bei Eingang eines Unterschreitungs- oder Überspannungs-Signales die Versorgungsspannung entsprechend reduziert. Hierdurch kann insbesondere der Effekt, der durch einen schwächer werdenden Rotormagneten eintritt, kompensiert werden. Da bei schwächer werdendem Rotormagneten und konstanter Versorgungsspannung die physikalisch erreichbare Drehfrequenz erhöht ist, kann durch eine entsprechende Reduzierung der Versorgungsspannung die physikalisch erreichbare Drehfrequenz wieder auf die Grenz-Drehfrequenz f_{G} reduziert werden.

Gemäß einem nebengeordneten Verfahrensanspruch zum Schützen einer Vakuum-Turbomolekularpumpe vor Überdrehzahl, wobei die Turbomolekularpumpe die Merkmale des Anspruches 1 aufweist, sind folgende Verfahrensschritte vorgesehen:
- Messen der von dem Rotormagneten in der Statorspule induzierten Spannung,
- Vergleichen der gemessenen Spannung mit einem hinterlegten EMK-Grenzwert, und
- Ausgeben eines Unterschreitungs-Signales, wenn die gemessene Spannung den EMK-Grenzwert unterschreitet,
- Reduzieren der Versorgungsspannung bei Eingang eines Unterscheidungssignales.

Mit diesem Verfahren wird die Magnetkraft des Motorrotor-Permanentmagneten ständig überwacht. Wird die Magnetkraft des Permanentmagneten im Laufe der Zeit schwächer, was gleichzeitig eine Erhöhung der physikalisch erreichbaren Drehfrequenz zur Folge hat, wird ein entsprechendes Unterschreitungs-Signal ausgegeben, so dass entsprechende Maßnahmen ergriffen werden können.

Alternativ oder ergänzend kann ein Überspannungs-Signal ausgegeben werden, wenn die Versorgungsspannung U_{V} einen gespeicherten Versorgungsspannungs-Grenzwert überschreitet. Hierdurch wird sichergestellt, dass sich die physikalisch erreichbare Drehfrequenz nicht unbemerkt erhöhen kann.

Vorzugsweise wird der Antriebsmotor abgeschaltet, wenn ein Überspannungs- oder ein Unterschreitungs-Signal ausgegeben wird. Hierdurch wird mit hoher Sicherheit vermieden, dass die Grenz-Drehfrequenz f_{G} überschritten wird.

Alternativ oder Ergänzend kann die Versorgungsspannung bei Eingang eines Überspannungs-Signales entsprechend reduziert werden. Hierdurch wird die physikalisch erreichbare Drehfrequenz gegebenenfalls wieder auf die Grenz-Drehfrequenz f_{G} reduziert.

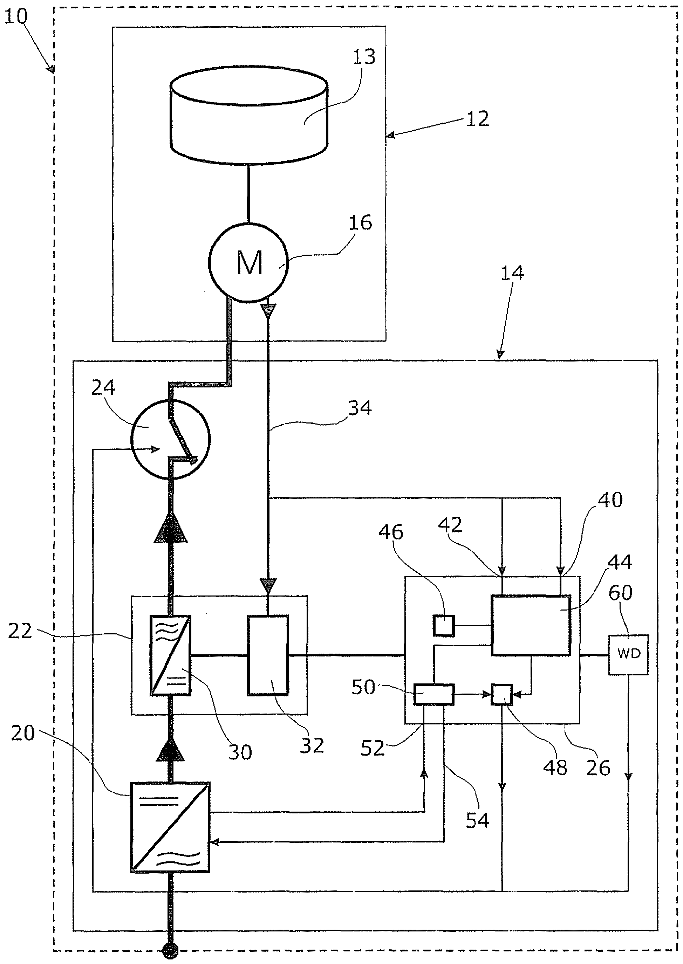

Im Folgenden wird unter Bezugnahme auf die Zeichnung ein Ausführungsbeispiel der Erfindung näher erläutert.

Die Figur zeigt eine Vakuum-Turbomolekularpumpe in schematischer Darstellung.

In der Figur ist eine schnelldrehende Vakuum-Turbomolekularpumpe 10 dargestellt, die im wesentlichen aus einer Pumpeneinheit 12 und einer Steuerungseinheit 14 besteht. Die Turbomolekularpumpe dient der Erzeugung eines Hochvakuums. Derartige Turbomolekularpumpen laufen mit Nenn-Drehfrequenzen f_{N} von 300-1.600 Hz. Die Pumpeneinheit 12 weist einen Pumpenrotor 13 und einen Antriebsmotor 16 auf.

Die Steuerungseinheit 14 weist als wesentliche Elemente eine Spannungsversorgung 20, eine Motorsteuerung 22, ein Abschaltmodul 24 sowie eine Schutzvorrichtung 26 auf. Die Steuerungseinheit 14 dient der Steuerung und Kontrolle des Antriebsmotors 16.

Wegen der hohen Nenn-Drehfrequenz von Vakuum-Turbomolekularpumpen darf die Nenn-Drehfrequenz f_{N}, für die die Festigkeit des Pumpenrotors ausgelegt ist, nicht wesentlich überschritten werden. Andernfalls erhöhen sich die Fliehkräfte derart, dass der Pumpenrotor 13, und konkret die Rotorflügel, hierdurch zerstört und zu gefährlichen Geschossen werden können. Da das Gehäuse der Pumpeneinheit 12 nicht beliebig fest und eigensicher ausgelegt werden kann, sind zuverlässige und redundante Kontroll- und Sicherheitseinrichtungen erforderlich, die eine namhafte Überschreitung der Nenn-Drehfrequenz f_{N} verhindern.

Wegen ihrer günstigen Verlustleistungsbilanz ist der Antriebsmotor 16 ein elektronisch kommutierter bürstenloser Gleichstrommotor. Der Antriebsmotor 16 weist demnach statorseitig Statorspulen auf, während der Motorrotor durch mindestens einen Permanentmagneten permanent-magnetisch ausgebildet ist. Nachteilig an diesem Typ Antriebsmotor ist jedoch, dass dieser bei Störungen oder Ausfall der Drehzahlregelung prinzipbedingt weit über die Nenn-Drehfrequenz f_{N} hinaus beschleunigt werden kann, wenn die Spannungsversorgung hierfür genügend elektrische Energie zur Verfügung stellt.

Die Motorsteuerung 22 weist einen Umrichter 30 und einen Drehfrequenzregler 32 auf, der die Ist-Frequenz f_{I} über eine Signalleitung 34 von dem Antriebsmotor 16 empfängt, mit einer Soll-Drehfrequenz f_{S} vergleicht und ein entsprechend der Differenz hieraus gebildetes Steuersignal wieder an den Umrichter 30 ausgibt. Der Umrichter 30 erzeugt aus der durch die Spannungsversorgung 20 bereitgestellten gleichgerichteten elektrischen Energie entsprechende Ströme für die Statorspulen des Antriebsmotors 16. Bei störungsfreiem Normalbetrieb wird der Antriebsmotor 16 alleine durch die Motorsteuerung 22 auf die Nenn-Drehfrequenz f_{N} hochgefahren und bei konstanter Nenn-Drehfrequenz f_{N} betrieben.

Eine besondere Eigenschaft eines Gleichstrom-Antriebsmotors mit Statorspulen und permanent erregtem Motorrotor ist die Induzierung elektrischer Spannungen in die Statorspulen durch den rotierenden permanent erregten Motorrotor. Die hierbei entstehende Kraft, die der Antriebskraft des Antriebsmotors 16 entgegenwirkt, wird als elektromotorische Kraft bezeichnet. Es kann nur dann ein Drehmoment zur Beschleunigung des Motorrotors erzeugt werden, wenn die von der Spannungsversorgung 20 zur Verfügung gestellte Urspannung, die der Motorsteuerung 22 zur Bestromung der Statorspulen zur Verfügung steht, größer ist als die entgegengerichtete durch den Motorrotor induzierte Spannung, bzw. die Antriebskraft größer ist als die entgegengerichtete elektromotorische Kraft.

Die Spannungsversorgung 20 stellt eine konstante Versorgungsspannung U_{V} zur Verfügung. Die Versorgungsspannung U_{V} wird so eingestellt, dass sie so niedrig ist, dass bei einer Grenz-Drehfrequenz f_{G} die von der Motorsteuerung 22 bzw. dem Umrichter 30 und den Statorspulen des Antriebsmotors 16 maximal erzeugbare Antriebskraft gleich der elektromotorischen Kraft ist. Die Grenz-Drehfrequenz f_{G} wird so gewählt, dass sie etwas größer als die Nenn-Drehfrequenz f_{N} ist. Die Grenz-Drehfrequenz f_{G} sollte kleiner als das 1,3-fache der Nenn-Drehfrequenz f_{N} sein und beträgt vorliegend ungefähr das 1,05-fache der Nenn-Drehfrequenz f_{N}.

Selbst bei Ausfall des Drehzahlreglers und hierdurch bedingter maximaler Bestromung der Statorspulen, kann der Antriebsmotor 16 den Pumpenrotor 13 nicht über die Grenz-Drehfrequenz f_{G} hinaus beschleunigen, da bei der Grenz-Drehfrequenz f_{G} und höheren Drehfrequenzen die elektromotorische Kraft gleich bzw. größer als die von den Statorspulen mit der zur Verfügung stehenden elektrischen Energie erzeugbare Antriebskraft ist. Durch die gezielte Begrenzung der von der Spannungsversorgung 20 zur Verfügung gestellten Versorgungsspannung wird gewissermaßen eine Leistungsbegrenzung eingeführt, die die maximal erzielbare Drehfrequenz f physikalisch begrenzt.

Die durch den permanent erregten Motorrotor in den Statorspulen bei Rotation generierte Spannung bzw. die hierbei erzeugte elektromotorische Kraft ist direkt proportional von der Magnetkraft des Rotormagneten bzw. der Rotormagneten in dem Motorrotor abhängig. Mit der Zeit und negativ beeinflusst durch hohe Temperaturen nimmt die Magnetkraft von Permanentmagneten ab. Hierdurch verringert sich im Laufe der Zeit auch die durch den Permanentmagneten bzw. die Permanentmagnete des Motorrotors in den Statorspulen induzierte Spannung und die hierbei erzeugte elektromotorische Kraft, und zwar immer bezogen auf dieselbe Drehfrequenz. Dies hat zur Folge, dass die Drehfrequenz, bei der die elektromotorische Kraft und die von der Motorsteuerung 22 zur Verfügung gestellte elektrische Energie zur Bestromung der Statorspulen im Gleichgewicht stehen, im Laufe der Zeit ansteigt. Dies bedeutet eine neue Gefahr und ist daher unerwünscht.

Aus diesem Grund weist die Steuerungseinheit 14 eine Schutzvorrichtung 26 auf, die den Entmagnetisierungsvorgang in dem permanent-magnetischen Motorrotor überwacht. Die Schutzvorrichtung 26 weist einen EMK-Eingang 40 und einen Drehfrequenz-Eingang 42 auf. Beide Eingänge 40,42 münden in ein EMK-Auswertemodul 44, dem ferner ein EMK-Grenzwertspeicher 46 und ein Signalgeber 48 zugeordnet sind. An dem EMK-Eingang 40 liegt die von dem permanent erregten Motorrotor in den Statorspulen induzierte Spannung an. An dem Drehfrequenz-Eingang 42 wird dasselbe Signal bezüglich der Drehfrequenz f des Antriebsmotors 16 ausgewertet. Beide Signale werden in dem EMK-Auswertemodul 44 mit den in dem EMK-Grenzwertspeicher 46 gespeicherten EMK-Grenzwerten drehfrequenzabhängig verglichen. Ist die bei einer bestimmten Drehfrequenz f an dem EMK-Eingang 40 anliegende Spannung geringer als der für dieselbe Drehfrequenz in dem EMK-Grenzwertspeicher gespeicherte Spannungswert, gibt die Schutzvorrichtung 26 über einen Signalgeber 48 ein Unterschreitungs-Signal aus, das seinerseits das Abschaltmodul 24 veranlasst, einen Schalter zu öffnen, so dass die Statorspulen mit der Motorsteuerung 22 nicht mehr elektrisch verbunden sind und der Antriebsmotor 16 auf diese Weise abgeschaltet wird.

Die Schutzvorrichtung 26 weist ein weiteres Kontrollelement auf, nämlich ein Spannungsüberwachungsmodul 50. In dem Spannungsüberwachungsmodul 50 wird die von der Spannungsversorgung 20 an ihrem Ausgang der Motorsteuerung 22 zur Verfügung gestellte Versorgungsspannung U_{V} überwacht und gegebenenfalls über eine Versorgungsspannungs-Steuerleitung 54 reduziert. Das Überwachungsmodul 50 greift ein, wenn die Spannungsversorgung 20 eine höhere Versorgungsspannung liefert, als in dem Überwachungsmodul 50 hinterlegt ist. Ist die Korrektur der Versorgungsspannung U_{V} über die Steuerleitung 54 erfolglos, gibt die Schutzvorrichtung 26 ein ÜberspannungsSignal über den Signalgeber 48 aus, das wiederum die Abschaltung des Abschaltmodules 24 veranlasst. Das von dem Signalgeber 48 ausgegebene Signal kann also ein von dem Überwachungsmodul 50 kommendes Versorgungsspannungs-Überspannungs-Signal oder aber ein von dem EMK-Auswertemodul 44 kommendes EMK-Unterschreitungs-Signal sein.

Zur Überwachung der Hardware der Schutzvorrichtung 26 und ihrer Basisfunktionen dient ein Watchdog-Modul 60, das eine eigene Zeitbasis besitzt und bei Fehlfunktionen ein Abschaltsignal an das Abschaltmodul 24 sendet, das seinerseits den Antriebsmotor 16 abschaltet.

## Patentansprüche

1. Vakuum-Turbomolekularpumpe (10) mit
einem bürstenlosen Gleichstrom-Antriebsmotor (16), der Statorspulen und einen permanent magnetischen Motorrotor aufweist, wobei der Motorrotor eine gegen die Rotationsrichtung gerichtete elektromotorische Kraft verursacht,
einer mit den Statorspulen verbundenen Motorsteuerung (22), die aus einer Versorgungsspannung (U_{V}) einen Strom erzeugt, der in die Statorspulen eingeprägt wird,
einem Drehfrequenzregler (32), der die Drehfrequenz (f) des Antriebsmotors (16) auf eine Nenn-Drehfrequenz (f_{N}) begrenzt, und
einer mit der Motorsteuerung (22) verbundenen Spannungsversorgung (20), die eine konstante Gleichspannung als Versorgungsspannung (U_{V}) für die Motorsteuerung (22) liefert,
**dadurch gekennzeichnet,**
**dass** die Spannungsversorgung (20) derart ausgelegt ist, dass die konstante Versorgungsspannung (U_{V}) so niedrig gewählt ist, dass bei einer Grenz-Drehfrequenz (f_{G}) die elektromotorische Kraft gleich der von der Motorsteuerung (22) und den Statorspulen maximal erzeugbaren Antriebskraft ist, wobei die Grenz-Drehfrequenz (f_{G}) kleiner als das 1,3-fache der Nenn-Drehfrequenz (f_{N}) ist, und
**dass** eine Steuerungseinheit (14) dazu vorgesehen ist, die Versorgungsspannung kontinuierlich an die aktuelle Motor-Gegen-EMK anzupassen.

2. Vakuum-Turbomolekularpumpe (10) nach Anspruch 1, **dadurch gekennzeichnet, dass** eine Schutzvorrichtung (26) vorgesehen ist, die aufweist:
- einen EMK-Eingang (40), an dem die von dem Motorrotor in den Statorspulen induzierte Spannung anliegt,
- einen EMK-Grenzwertspeicher (46), in dem drehfrequenzabhängig EMK-Grenzwerte gespeichert sind,
- ein EMK-Auswertemodul (44), das feststellt, ob die am EMK-Eingang (40) gemessene Spannung den EMK-Grenzwert unterschreitet, und
- ein Signalgeber (48), der ein Unterschreitungs-Signal ausgibt, wenn das EMK-Auswertemodul (44) eine Unterschreitung feststellt.

3. Vakuum-Turbomolekularpumpe (10) nach Anspruch 1 oder 2, **dadurch gekennzeichnet, dass** die Grenz-Drehfrequenz (f_{G}) kleiner als das 1,1-fache der Nenn-Drehfrequenz (f_{N}) ist.

4. Vakuum-Turbomolekularpumpe (10) nach einem der Ansprüche 1 bis 3, **dadurch gekennzeichnet, dass** die Schutzvorrichtung (26) einen Versorgungsspannungs-Eingang (52) aufweist und bei Überschreiten eines gespeicherten Versorgungsspannungs-Grenzwertes der Signalgeber (48) ein Überspannungs-Signal ausgibt.

5. Vakuum-Turbomolekularpumpe (10) nach einem der Ansprüche 1 bis 4, **dadurch gekennzeichnet, dass** der Signalgeber (48) mit einem Abschaltmodul (24) verbunden ist, das bei Eingang eines Unterschreitungs-Signales oder eines Überspannungs-Signales den Antriebsmotor (16) abschaltet.

6. Vakuum-Turbomolekularpumpe (10) nach einem der Ansprüche 2 bis 5, **dadurch gekennzeichnet, dass** die Schutzvorrichtung (26) mit der Spannungsversorgung (20) verbunden ist, und die Schutzvorrichtung (26) bei Vorliegen eines Unterschreitungs- oder Überspannungs-Signales die Spannungsversorgung (20) zur Verringerung der Versorgungsspannung (U_{V}) veranlasst.

7. Verfahren zum Schützen einer Vakuum-Turbomolekularpumpe (10) vor Überdrehzahl, wobei die Turbomolekularpumpe (10) aufweist:
einen bürstenlosen Gleichstrom-Antriebsmotor (16), der Statorspulen und einen permanent magnetischen Motorrotor aufweist, wobei der Motorrotor eine gegen die Rotationsrichtung gerichtete elektromotorische Kraft verursacht,
eine mit den Statorspulen verbundenen Motorsteuerung (22), die aus einer Versorgungsspannung (U_{V}) einen Strom erzeugt, der in die Statorspulen eingeprägt wird,
einen Drehfrequenzregler (32), der die Drehfrequenz (f) des Antriebsmotors (16) auf eine Nenn-Drehfrequenz (f_{N}) begrenzt, und
eine mit der Motorsteuerung (22) verbundenen Spannungsversorgung (20), die eine konstante Gleichspannung als Versorgungsspannung (U_{V}) für die Motorsteuerung (22) liefert,
wobei die Spannungsversorgung (20) derart ausgelegt ist, dass die konstante Versorgungsspannung (U_{V}) so niedrig ist, dass bei einer Grenz-Drehfrequenz (f_{G}) die elektromotorische Kraft gleich der von der Motorsteuerung (22) und den Statorspulen maximal erzeugbaren Antriebskraft ist, wobei die Grenz-Drehfrequenz (f_{G}) kleiner als das 1,3-fache der Nenn-Drehfrequenz (f_{N}) ist,
mit den Verfahrensschritten
- Messen der von den Motorrotor in den Statorspulen induzierten Spannung,
- Vergleichen der gemessenen Spannung mit einem hinterlegten EMK-Grenzwert,
- Ausgeben eines Unterschreitungs-Signales, wenn die gemessene Spannung den EMK-Grenzwert unterschreitet,
- Anpassen der Versorgungsspannung (U_{V}), wenn die gemessene Spannung den EMK-Grenzwert unterschreitet.

8. Verfahren zum Schützen einer Vakuum-Turbomolekularpumpe (10) nach Anspruch 7, **gekennzeichnet durch**: Ausgeben eines Überspannungs-Signales, wenn die Versorgungsspannung (U_{V}) einen gespeicherter Versorgungsspannungs-Grenzwert überschreitet.

9. Verfahren zum Schützen einer Vakuum-Turbomolekularpumpe (10) nach Anspruch 7 oder 8, **gekennzeichnet durch**: Abschalten des Antriebsmotors (16), wenn ein Überspannungs- oder Unterschreitungs-Signal ausgegeben wird.

10. Verfahren zum Schützen einer Vakuum-Turbomolekularpumpe (10) nach Anspruch 8, **gekennzeichnet durch** den Verfahrensschritt: Reduzieren der Versorgungsspannung (U_{V}) bei Eingang eines Überspannungs-Signales.

## Claims

1. A vacuum turbomolecular pump (10) comprising
a brushless direct-current drive motor (16) comprising stator coils and a permanent-magnetically excited motor rotor, said motor rotor producing an electromotive force oriented opposite to the direction of rotation,
a motor controller (22) connected to the stator coils and operative to generate a current from a supply voltage (U_{V}), said current being impressed into the stator coils,
a rotational-frequency regulator (32) limiting the rotational frequency (f) of the drive motor (16) to a nominal rotational frequency (f_{N}), and
a voltage supply unit (20) connected to the motor controller (22) and operative to supply a constant direct voltage as a supply voltage (U_{V}) for the motor controller (22),
**characterized in**
**that** said voltage supply unit (20) is designed to cause the constant supply voltage (U_{V}) to be selected at such a low level that, at a limit rotational frequency (f_{G}), the electromotive force is equal to the maximum drive force which the motor controller (22) and the stator coils can generate, said limit rotational frequency (f_{G}) being smaller than 1.3 times the nominal rotational frequency (f_{N}), and
**that** a control unit (14) is provided to continuously adapt the supply voltage to the current motor counter EMF.

2. The vacuum turbomolecular pump (10) according to claim 1, **characterized in that** a protective device (26) is provided, said protective device comprising:
- an EMF input (40) conducting the voltage induced in the stator coils by the rotor magnet,
- an EMF limit value store (46) where EMF limit values are stored in dependence on the rotational frequency,
- an EMF evaluation module (44) configured to detect whether the voltage measured at the EMF input (40) falls short of the EMF limit value, and
- a signaling device (48) configured to emit a shortfall signal when the EMF evaluation module (44) detects a shortfall.

3. The vacuum turbomolecular pump (10) according to claim 1 or 2, **characterized in that** the limit rotational frequency (f_{G}) smaller than 1.1 times the nominal rotational frequency (f_{N}).

4. The vacuum turbomolecular pump (10) according to any one of claims 1 to 3, **characterized in that** the protective device (26) comprises a supply voltage input (52) and that the signaling device (48) is operative to output an overvoltage signal when a stored supply-voltage limit value is exceeded.

5. The vacuum turbomolecular pump (10) according to any one of claims 1 to 4, **characterized in that** the signaling device (48) is connected to a switch-off module (24) operative to switch off the drive motor (16) upon receipt of a shortfall signal or an overvoltage signal.

6. The vacuum turbomolecular pump (10) according to any one of claims 2 to 5, **characterized in that** the protective device (26) is connected to the voltage supply unit (20) and that the protective device (26) causes the voltage supply unit (20) to reduce the supply voltage (U_{V}) upon receipt of a shortfall signal or an overvoltage signal.

7. A method for protecting a vacuum turbomolecular pump (10) from an excessive rotational speed, said vacuum turbomolecular pump (10) comprising:
a brushless direct-current drive motor (16) comprising stator coils and a permanent-magnetically excited motor rotor, said motor rotor producing an electromotive force oriented opposite to the direction of rotation,
a motor controller (22) connected to the stator coils and operative to generate a current from a supply voltage (U_{V}), said current being impressed into the stator coils,
a rotational-frequency regulator (32) limiting the rotational frequency (f) of the drive motor (16) to a nominal rotational frequency (f_{N}), and
a voltage supply unit (20) connected to the motor controller (22) and operative to supply a constant direct voltage as a supply voltage (U_{V}) for the motor controller (22),
said voltage supply unit (20) being designed to cause the constant supply voltage (U_{V}) to be at such a low level that, at a limit rotational frequency (f_{G}), the electromotive force is equal to the maximum drive force which the motor controller (22) and the stator coils can generate, said limit rotational frequency (f_{G}) being smaller than 1.3 times the nominal rotational frequency (f_{N}),
said method comprising the steps of:
- measuring the voltage induced in the stator coils by the motor rotor,
- comparing the measured voltage with a stored EMF limit value,
- emitting a shortfall signal when the measured voltage falls short of the EMF limit value,
- adapting the supply voltage (U_{V}) when the measured voltage falls short of the EMF limit value.

8. The method for protecting a vacuum turbomolecular pump (10) according to claim 7, **characterized by**: outputting an overvoltage signal when the supply voltage (U_{V}) exceeds a stored supply-voltage limit value.

9. The method for protecting a vacuum turbomolecular pump (10) according to claim 7 or 8, **characterized by**: switching off the drive motor (16) when an overvoltage signal or a shortfall signal is output.

10. The method for protecting a vacuum turbomolecular pump (10) according to claim 8, **characterized by** the method step of: reducing the supply voltage (U_{V}) upon receipt of an overvoltage signal.

## Revendications

1. Pompe turbomoléculaire à vide (10), avec
un moteur d'entraînement à courant continu (16) sans balais, qui présente des bobines de stator et un rotor de moteur magnétique permanent, le rotor de moteur provoquant une force électromotrice dirigée à l'inverse du sens de rotation,
une commande de moteur (22) raccordée aux bobines de stator qui produit à partir d'une tension d'alimentation (U_{V}) un courant qui est appliqué dans les bobines de stator,
un régulateur de fréquence de rotation (32) qui limite à une fréquence de rotation nominale (f_{N}) la fréquence de rotation (f) du moteur d'entraînement (16), et
une alimentation en tension (20), raccordée à la commande de moteur (22), qui fournit une tension continue constante en tant que tension d'alimentation (U_{V}) pour la commande de moteur (22),
**caractérisée en ce que**
l'alimentation en tension (20) est conçue de telle sorte que la tension d'alimentation (U_{V}) constante est choisie faible de telle sorte que, pour une fréquence de rotation limite (f_{G}), la force électromotrice est égale à la force d'entraînement pouvant être produite au maximum par la commande de moteur (22) et les bobines de stator, la fréquence de rotation limite (f_{G}) étant inférieure à 1,3 fois la fréquence de rotation nominale (f_{N}), et
**en ce qu'**une unité de commande (14) est prévue pour adapter en continu la tension d'alimentation à la FEM actuelle.

2. Pompe turbomoléculaire à vide (10) selon la revendication 1, **caractérisée en ce qu'**il est prévu un dispositif de protection (26) qui présente :
- une entrée FEM (40) à laquelle est appliquée la tension induite par le rotor de moteur dans les bobines de stator,
- une mémoire de valeurs limites FEM (46) dans laquelle sont enregistrées des valeurs limite FEM en fonction de la fréquence de rotation,
- un module d'analyse FEM (44) qui constate si la tension mesurée à l'entrée FEM (40) passe au-dessous de la valeur limite FEM
- un générateur de signaux (48) qui délivre un signal de dépassement négatif si le module d'analyse FEM (44) détecte un dépassement négatif

3. Pompe turbomoléculaire à vide (10) selon la revendication 1 ou 2, **caractérisée en ce que** la fréquence de rotation limite (f_{G}) est inférieure à 1,1 fois la fréquence de rotation nominale (f_{N}).

4. Pompe turbomoléculaire à vide (10) selon l'une des revendications 1 à 3, **caractérisée en ce que** le dispositif de protection (26) présente une entrée de tension d'alimentation (52) et un générateur de signaux (48) délivre un signal de surtension en cas de passage au-dessus d'une valeur limite de tension d'alimentation enregistrée.

5. Pompe turbomoléculaire à vide (10) selon l'une des revendications 1 à 4, **caractérisée en ce que** le générateur de signaux (48) est raccordé à un module de coupure (24) qui coupe le moteur d'entraînement (16) lors de l'entrée d'un signal de dépassement négatif ou d'un signal de surtension.

6. Pompe turbomoléculaire à vide (10) selon l'une des revendications 2 à 5, **caractérisée en ce que** le dispositif de protection (26) est raccordé à l'alimentation en tension (20) et, en cas de présence d'un signal de dépassement négatif ou d'un signal de surtension, le dispositif de protection (26) conduit l'alimentation en tension (20) à réduire la tension d'alimentation (U_{V}).

7. Procédé destiné à protéger une pompe turbomoléculaire à vide (10) contre un surrégime, la pompe turbomoléculaire à vide (10) présentant :
un moteur d'entraînement à courant continu (16) sans balais, qui présente des bobines de stator et un rotor de moteur magnétique permanent, le rotor de moteur provoquant une force électromotrice dirigée à l'inverse du sens de rotation,
une commande de moteur (22) raccordée aux bobines de stator qui produit à partir d'une tension d'alimentation (U_{V}) un courant qui est appliqué dans les bobines de stator,
un régulateur de fréquence de rotation (32) qui limite à une fréquence de rotation nominale (f_{N}) la fréquence de rotation (f) du moteur d'entraînement (16), et
une alimentation en tension (20), raccordée à la commande de moteur (22), qui fournit une tension continue constante en tant que tension d'alimentation (U_{V}) pour la commande de moteur (22),
l'alimentation en tension (20) étant conçue de telle sorte que la tension d'alimentation (U_{V}) constante est choisie faible de telle sorte que, pour une fréquence de rotation limite (f_{G}), la force électromotrice est égale à la force d'entraînement pouvant être produite au maximum par la commande de moteur (22) et les bobines de stator, la fréquence de rotation limite (f_{G}) étant inférieure à 1,3 fois la fréquence de rotation nominale (f_{N}),
avec les étapes de procédé suivantes :
- mesure de la tension induite dans les bobines de stator par le rotor de moteur,
- comparaison de la tension mesurée avec une valeur limite FEM stockée,
- délivrance d'un signal de dépassement négatif quand la tension mesurée passe au-dessous de la valeur limite FEM,
- adaptation de la tension d'alimentation (U_{V}) quand la tension mesurée passe au-dessous de la valeur limite FEM.

8. Procédé destiné à protéger une pompe turbomoléculaire à vide (10) selon la revendication 7, **caractérisé par** la délivrance d'un signal de surtension quand la tension d'alimentation (U_{V}) passe au-dessus d'une valeur limite de tension d'alimentation enregistrée.

9. Procédé destiné à protéger une pompe turbomoléculaire à vide (10) selon la revendication 7 ou 8, **caractérisé par** la coupure du moteur d'entraînement (16) quand un signal de surtension ou de dépassement négatif est délivré.

10. Procédé destiné à protéger une pompe turbomoléculaire à vide (10) selon la revendication 8, **caractérisé par** l'étape de procédé suivant : réduire la tension d'alimentation (U_{V}) lors de l'entrée d'un signal de surtension.
